# EUROPÄISCHE PATENTSCHRIFT

(11) **EP 2 116 447 B1**
(45) Veröffentlichungstag und Bekanntmachung des Hinweises auf die Patenterteilung: **15.08.2012**
(21) Anmeldenummer: 09159878.9
(22) Anmeldetag: 11.05.2009
(51) Int. Cl.: B62D 25/20, B62D 33/077

(54) **Querträger für ein Bodenelement eines Fahrzeugs, wie eines Lastkraftwagens, Aufliegers oder Anhängers, und Bodenelement mit einem solchen Querträger**
Cross member for a base element of a vehicle, such as a lorry trailer, semi-trailer or trailer, and base element with such a cross member
Traverse pour un élément de plancher d'un véhicule, comme un poids lourd, une semi-remorque ou une remorque, et élément de plancher doté d'une telle traverse

(30) Priorität: 09.05.2008 EP 08103915
(43) Veröffentlichungstag der Anmeldung: 11.11.2009
(73) Patentinhaber: Schmitz Cargobull AG, 48341 Altenberge (DE)
(72) Erfinder: Maier, Christof, 41564 Kaarst (DE); Niewerth, Markus, 48683 Ahaus (DE)
(74) Vertreter: Cohausz & Florack

(56) Entgegenhaltungen:
- WO-A1-89/10292
- CH-A- 543 983
- GB-A- 2 419 573
- US-A- 4 526 418

## Beschreibung

Die Erfindung betrifft einen Querträger für ein Bodenelement eines Fahrzeugs, wie eines Lastkraftwagens, Aufliegers oder Anhängers, mit einem langgestreckten Grundkörper, der eine Aufstandfläche aufweist, mit der der Querträger auf eine korrespondierende Fläche des Bodenelements aufstellbar ist, und mit einem Anschlusselement, das aus einem festeren Material als der Grundkörper hergestellt und dazu vorgesehen ist, mittels eines Verbindungselements, wie einer Schraube, mit einem Bauteil verbunden zu werden.

Darüber hinaus betrifft die Erfindung ein mit einem solchen Querträger ausgestattetes Bodenelement.

Derartige Querträger werden beispielsweise in Bodenelemente für Kofferaufbauten von Kühlfahrzeugen oder vergleichbaren Transportfahrzeugen verwendet. Bei solchen Transportfahrzeugen übernehmen die Bodenelemente zum einen die Aufgabe, die jeweils zu transportierende Last abzustützen. Zum anderen müssen sie eine gute wärmeisolierende Wirkung besitzen, damit der über das Bodenelement erfolgende Wärmeübergang möglichst klein bleibt. Darüber hinaus sollen solche Bodenelemente ein möglichst geringes Eigengewicht aufweisen, damit die von der Zugmaschine gelieferte Leistung im größtmöglichen Umfang für den Transport der jeweiligen Last genutzt werden kann.

Um diese Anforderungen zu erfüllen, werden beispielsweise für Kofferaufbauten von Kühlfahrzeugen verwendete Bodenelemente heutzutage nach Art von Sandwichkonstruktionen aufgebaut. Sie weisen dazu eine obere Decklage auf, deren freie Oberfläche eine Ladefläche bildet, auf der eine zu transportierende Last abstellbar ist.

Den Abschluss zur Unterseite des Fahrzeugs bildet bei den bekannten Bodenelementen in der Regel eine untere Decklage. In dem Raum zwischen der oberen und der unteren Decklage sind dabei quer zur Längsrichtung des Bodenelements ausgerichtete und beabstandet zueinander angeordnete Querstege positioniert. Diese teilen den zwischen den Decklagen vorhandenen Raum in Kammern, die sich quer zur Längsrichtung des Bodenelements erstrecken.

Um das Bodenelement beispielsweise mit der notwendigen Sicherheit mit dem Fahrzeugschassis verbinden oder andere Bauteile, wie Staukästen, Stützböcke oder ähnliches an das Bodenelement anschrauben zu können, sind in der Regel einige Querstege der bekannten Bodenelemente als so genannte Querträger ausgebildet. Diese sind üblicherweise so ausgelegt, dass sie eine höhere Tragfähigkeit als die einfachen Querstege besitzen.

Ein zu diesem Zweck vorgesehener Querträger ist in der DE 199 05 650 C1 beschrieben. Dieser Querträger weist einen aus einem Holzmaterial, insbesondere geschichtetem Sperrholz gebildeten Grundkörper auf, der eine langgestreckte, sich über die Breite des jeweiligen Bodenelements erstreckende Form besitzt. Zusätzlich weist der bekannte Querträger in den Bereichen, in denen das jeweilige Verbindungselement mit ihm verbunden wird, jeweils eine aus Stahl gefertigte Verstärkung auf.

Diese Verstärkung ist nach Art einer im Querschnitt U-förmigen Spange ausgebildet, die auf den Grundkörper aufgesetzt wird und mit ihren freien Schenkeln seitlich an dem Grundkörper anliegt. Um einen schiebesicheren Halt der Verstärkung zu gewährleisten, sind in die Seitenflächen des Grundkörpers Ausnehmungen eingeformt, in denen die Schenkel der Verstärkung sitzen. An ihren freien Enden sind die Schenkel der Verstärkung mit einer so genannten "Bodenplatte" verschweißt. Diese sitzt in einer in die Aufstandfläche des Grundkörpers eingeformten Ausnehmung. In die Bodenplatte ist dabei eine Gewindeöffnung eingeformt, in die eine Schraube zum Befestigen des jeweiligen Bauteils an dem mit dem Querträger ausgestatteten Bodenelement einschraubbar ist.

Die gemeinsam mit der Bodenplatte den Grundkörper des Querträgers vollständig umgreifende Verstärkung nimmt im praktischen Betrieb die Kräfte auf, die über die in die Bodenplatte eingeschraubte Schraube übertragen werden. Der Vorteil der bekannten Querträgerkonstruktion besteht dabei darin, dass die von der Verstärkung aufgenommenen Kräfte zum überwiegenden Teil als Druckkräfte verhältnismäßig großflächig auf den Querträger verteilt werden. Dies führt zu einer Belastungssituation, bei der der Querträger auch dann hohe Kräfte aufnehmen kann, wenn er aus einem vergleichbar schwachen Material, wie Holz, hergestellt ist.

Allerdings muss dazu ein erheblicher Aufwand bei der Herstellung der bekannten Querträger in Kauf genommen werden. So ist nicht nur die Montage der Stahl-Verstärkungen und der Bodenplatte an dem Grundkörper aufwändig, sondern es müssen auch an dem Grundkörper verschiedene Arbeitsgänge durchgeführt werden, um an ihm die erforderlichen Ausnehmungen zu erzeugen.

Diese Probleme können bei einem Querträger der eingangs angegebenen Art vermieden werden, wenn bei diesem Querträger das Anschlusselement in einer Ausnehmung sitzt, die mit Abstand zur Aufstandfläche in den Grundkörper eingeformt ist und die im Betrieb über das Verbindungselement übertragene Belastungen auf den Grundkörper verteilt. Ein entsprechend ausgebildeter Querträger ist in der WO 89/10292 beschrieben. In diesen bekannten Querträger ist eine nutförmige Aufnahme eingebracht, in der ein nach Art einer Druckverteilungsplatte wirkendes Anschlusselement sitzt. Das Anschlusselement weist dabei eine Gewindeöffnung auf. Diese ist fluchtend zu einer Durchgangsöffnung ausgerichtet, die ausgehend von der Aufstandfläche des Querträgers in die Ausnehmung führt und dabei wiederum fluchtend zu einer in die untere Decklage des Bodenelements eingeformte Öffnung ausgerichtet ist, das den äußeren Abschluss des unter Verwendung des bekannten Querträgers aufgebauten Bodenelements bildet. Auf diese Weise kann von der Außenseite des Bodenelements her ein als Verbindungselement dienender Schraubenbolzen in die Gewindeöffnung des Anschlusselements geschraubt werden, um das Bodenelement auf dem Fahrgestell des Nutzfahrzeugs zu befestigen.

Trotz der Vorteile der aus der WO 89/10292 bekannten Ausgestaltung eines Querträgers zeigt sich, dass es im praktischen Einsatz bei diesem Querträger zu hohen Belastungen der Wandungen der das plattenförmige Anschlusselement aufnehmenden Ausnehmung kommt. Diese können zu vorzeitigem Verschleiß mit der Folge führen, dass die Sicherheit der Befestigung des jeweiligen Bauteils an dem Querträger mit zunehmender Einsatzdauer nicht mehr gewährleistet ist.

Vor diesem Hintergrund lag der Erfindung die Aufgabe zu Grunde, mit einfachen Mitteln einen Querträger zu schaffen, bei dem auch über eine lange Einsatzdauer eine dauerhaft feste Befestigung eines Bauteils gesichert ist.

In Bezug auf den Querträger ist diese Aufgabe erfindungsgemäß dadurch gelöst worden, dass ein solcher Querträger gemäß Anspruch 1 ausgebildet ist. Vorteilhafte Ausgestaltungen des erfindungsgemäßen Querträgers sind in den auf Anspruch 1 rückbezogenen Ansprüchen angegeben.

In Bezug auf das Bodenelement ist die voranstehend angegebene Aufgabe erfindungsgemäß dadurch gelöst worden, dass ein solches Bodenelement entsprechend Anspruch 14 ausgebildet ist.

Ein erfindungsgemäßer Querträger für ein Bodenelement eines Fahrzeugs, wie eines Lastkraftwagens, Aufliegers oder Anhängers, weist in Übereinstimmung mit dem voranstehend erläuterten Stand der Technik einen langgestreckten Grundkörper auf. An diesem ist eine Aufstandfläche ausgebildet, mit der der Querträger auf eine korrespondierende Fläche des Bodenelements aufstellbar ist. Zudem weist der erfindungsgemäße Querträger auch ein Anschlusselement auf, das aus einem festeren Material als der Grundkörper hergestellt und dazu vorgesehen ist, mittels einem Verbindungselement, wie einer Schraube, mit einem Bauteil verbunden zu werden, wobei das Anschlusselement die im Betrieb über das Verbindungselement übertragenen Belastungen auf den Grundkörper verteilt. Dabei sitzt das Anschlusselement in einer Ausnehmung, die mit Abstand zur Aufstandfläche in den Grundkörper eingeformt ist. Das in dem Grundkörper sitzende Anschlusselement ist dabei direkt mit dem zu befestigenden Bauteil verbunden und überträgt die von ihm im praktischen Betrieb ausgehenden Kräfte unmittelbar auf den Querträger.

Bei einem erfindungsgemäßen Querträger übernimmt das Anschlussstück somit eine Doppelfunktion. So stellt es einerseits die Verbindung des Querträgers zu dem jeweils zu befestigenden Bauteil her und verteilt andererseits die im praktischen Einsatz auftretenden Belastungen auf den Querträger.

Dazu sitzt das Anschlusselement bei einem erfindungsgemäßen Querträger in einer Ausnehmung. Es leitet so die von dem Verbindungselement aufgebrachten Kräfte zum überwiegenden Teil als Druckkräfte in den Grundkörper des Querträgers ein.

Erfindungsgemäß ist nun das von dem Anschlusselement eingenommene Volumen kleiner als das Volumen der Ausnehmung. Bei in die Ausnehmung eingesetztem Anschlusselement verbleibt also zwischen dem Anschlusselement und den die Ausnehmung begrenzenden Flächen ein nicht von dem Anschlusselement eingenommener Raum. Das derart zwischen dem Anschlusselement und den Innenflächen der Ausnehmung vorhandene Restvolumen der Ausnehmung ist bei einem erfindungsgemäßen Querträger mit einer Zusatzmasse gefüllt, die das Anschlusselement in Bezug auf das Verbindungselement verdrehsicher in der Ausnehmung hält. Auf diese Weise ist die Lage des Anschlusselements in dem Querträger gesichert, ohne dass der Querträger besonderen Belastungen oder Schwächungen ausgesetzt ist, wie sie beispielsweise in dem Fall entstehen würden, dass das Anschlusselement in den Querträger eingepresst ist oder zusätzliche Bauelemente verwendet werden, um die Lage des Anschlusselements in der Ausnehmung zu fixieren.

Stattdessen kann bei einem erfindungsgemäßen Querträger die Zusatzmasse so ausgelegt werden, dass sie nicht nur die Lage des Anschlusselements fixiert, sondern auch noch nach Art eines elastischen Dämpfers Belastungsstöße abfängt. Ein weiterer Vorteil der erfindungsgemäßen Füllung des nicht von dem Anschlusselement eingenommenen Restvolumens der Ausnehmung besteht darin, dass die Zusatzmasse das Eindringen oder Ansammeln von Feuchtigkeit in die Ausnehmung verhindert. Dies ist insbesondere dann vorteilhaft, wenn der Querträger aus einem Holzwerkstoff oder einem anderen Werkstoff besteht, der empfindlich gegen Feuchtigkeit ist.

Mit der Erfindung steht somit ein Querträger zur Verfügung, bei dem mit besonders einfachen Mitteln eine sichere Anbindung des jeweils an dem Querträger befestigten Bauteils auch über eine lange Einsatzdauer gewährleistet ist.

Eine besonders einfache Formgebung sowohl des Anschlusselements als auch der ihm zugeordneten Ausnehmung des Querträgers ergibt sich, wenn plattenförmig ausgebildet ist. Eine solche Formgebung hat darüber hinaus den Vorteil, dass die von dem Anschlusselement aufgenommenen Kräfte großflächig auf den Grundkörper des Querträgers übertragen werden. Dies gilt insbesondere dann, wenn die Ausnehmung und mit ihr das plattenförmige Anschlusselement sich parallel zu der Aufstandfläche erstrecken.

Besonders wirksam ist die erfindungsgemäße Festlegung des Anschlusselements in der Ausnehmung des Querträgers dann, wenn das nicht von dem Anschlusselement eingenommene Restvolumen der Ausnehmung vollständig mit der Zusatzmasse gefüllt ist.

Bei der erfindungsgemäß zum Füllen des Restvolumens der Ausnehmung des Querträgers verwendeten Zusatzmasse kann es sich um einen konventionellen Dichtstoff handeln, der beim Ausbringen ausreichend fließfähig ist, um das Restvolumen zu füllen, und anschließend ausreichend fest wird, um die angestrebte Lagefixierung des Anschlusselements zu gewährleisten. Auch Harze oder andere zunächst fließfähige und später aushärtende Werkstoffe können zum erfindungsgemäßen Füllen des Restvolumens der Ausnehmung verwendet werden.

So kann es sich bei der Zusatzmasse auch um einen aushärtbaren Klebstoff handeln, wie er typischerweise beim Zusammenbau von Bodenelementen für Nutzfahrzeuge verwendet wird. Solche Klebermassen sind zunächst für eine ausreichende Verarbeitungsdauer fließfähig und härten dann durch Kontakt mit der Umgebungsatmosphäre aus, wobei die Aushärtungsgeschwindigkeit durch Wärmezufuhr beschleunigt werden kann.

Die Verwendung von zunächst fließfähigen und anschließend aushärtenden Zusatzmassen zum erfindungsgemäßen Füllen des Restvolumens der Ausnehmung hat fertigungstechnisch den Vorteil, dass ein ausreichendes Volumen der derart beschaffenen Zusatzmasse in die Ausnehmung gefüllt werden kann, bevor das Anschlusselement dort positioniert wird. Anschließend kann das Anschlusselement dann unter Verdrängung der dort vorhandenen, noch fließfähigen Zusatzmasse in die Ausnehmung gedrückt werden, so dass das verbleibende Restvolumen selbsttätig durch die verdrängte Zusatzmasse gefüllt wird. Die Zusatzmasse gelangt auf diese Weise nicht nur in die größeren freien Abschnitte des Restvolumens der Ausnehmung, sondern auch in die feineren Spalte, die zwischen der Außenfläche des Anschlusselements und der Innenfläche der Ausnehmung vorhanden sind.

Um sicherzustellen, dass die von der Zusatzmasse eingenommenen Spalte jeweils eine für die erfindungsgemäß gewünschte fixierende Wirkung ausreichende Größe besitzen, kann mindestens ein Abstandshalter vorgesehen sein, der das Anschlusselement in einem bestimmten Abstand von der zugeordneten Innenfläche der Ausnehmung hält. Diese Ausgestaltung ist insbesondere dann zweckmäßig, wenn als Zusatzmasse ein Kleber verwendet wird, bei dem eine gewisse Mindestschichtdicke gewährleistet sein muss, um die Klebwirkung eintreten zu lassen.

Die jeweils benötigten Abstandhalter können an das Anschlusselement angeformt sein. Besteht das Anschlusselement aus Stahl oder einem vergleichbar verformbaren metallischen Werkstoff, so kann der an dem jeweiligen Anschlusselement jeweils benötigte Abstandhalter durch einen Materialauftrag, beispielsweise durch Schweißen, oder durch eine Umformoperation erzeugt werden, bei der mindestens ein bestimmter Abschnitt des Anschlusselements mit einem geeigneten Stempel so gepresst wird, dass es in Folge von Materialfluss zu lokalen Materialanhäufungen des Anschlusselements kommt, die die Abstandhalter bilden.

Alternativ oder ergänzend können ein oder mehrere Abstandhalter an einer oder mehreren der Innenflächen der Ausnehmung ausgebildet sein. Dazu können beim Einformen der Ausnehmung in den Querträger mittels einer geeigneten Fräs-oder Bohroperation an den Innenflächen abschnittsweise stegartige Formelemente ausgebildet werden, die das in die Ausnehmung eingesetzte Anschlusselement linienförmig berühren. Eine Verschiebung des Anschlusselements in der Ausnehmung und damit möglicherweise einhergehender abrasiver Verschleiß im Bereich der Wandungen der Ausnehmung können dadurch zusätzlich verhindert werden, dass das Anschlusselement formschlüssig in der Ausnehmung gehalten ist. Zu diesem Zweck kann das Anschlusselement mindestens ein Formelement aufweisen, das formschlüssig mit einem an einer der Wandungen der Ausnehmung ausgebildeten, korrespondierend geformten Formelement zusammenwirkt. Bei dem an dem Anschlusselement vorgesehenen Formelement kann es sich beispielsweise um einen Vorsprung handeln, der formschlüssig in eine in die Wandung der Ausnehmung eingeformte Einsenkung greift.

Ein exakter spielfreier Sitz des Anschlusselements in der Ausnehmung kann auch dadurch unterstützt werden, dass das Anschlusselement im Querschnitt keilförmig ausgebildet ist. Bei dieser Ausgestaltung wird das Anschlusselement in Folge der von dem jeweiligen Verbindungselement ausgeübten Spannkräfte so in die Ausnehmung gezogen, dass es dort stets spielfrei gehalten ist.

Fertigungstechnisch günstig hat es sich erwiesen, wenn die erfindungsgemäß vorgesehene Ausnehmung als Sackloch in den Grundkörper des Querträgers eingeformt ist. Auf diese Weise sind keine zusätzlichen Maßnahmen erforderlich, um nach dem Einfüllen das ungewollte Abfließen der Zusatzmasse bis zu ihrer Aushärtung zu verhindern. Vielmehr kann der Querträger zum Einfüllen der Zusatzmasse mit der geschlossenen Seite der Ausnehmung auf eine Montagefläche gelegt und dann die Zusatzmasse unter Schwerkraftwirkung in die Ausnehmung gefüllt werden.

Insbesondere eine Verschraubung des zu befestigenden Bauteils kann dann besonders einfach erfolgen, wenn ausgehend von der Aufstandfläche in den Querträger eine in die Ausnehmung führende Öffnung zum Durchführen des Verbindungselements eingeformt ist. Diese Ausgestaltung erlaubt es zudem auf besonders einfache Weise, Verbindungselement und Anschlusselement so zueinander auszurichten, dass die vom Verbindungselement aufgebrachten Kräfte an zentraler Stelle in das Anschlusselement geleitet werden.

Die Gefahr von Verschleiß im Bereich der in den Grundkörper eingebrachten Öffnung zum Durchführen des Verbindungselements kann dabei dadurch vermindert werden, dass in die Öffnung für das Verbindungselement eine Hülse eingesetzt ist. Diese kann mehrere Funktionen besitzen. Zum einen schützt sie den Eingangsbereich der Öffnung des Grundkörpers gegen die von dem jeweiligen Verbindungselement ausgehenden Belastungen. Um diese Aufgabe zu erfüllen, kann die Hülse beispielsweise aus einem Material bestehen, das fester ist als das Material des Grundkörpers. Darüber hinaus kann die Hülse auch dazu genutzt werden, die Öffnung des Grundkörpers gegen die Umgebung abzudichten. Dazu kann die Hülse aus einem elastischen Material bestehen, das bei der Montage des jeweiligen Querträgers so stark zusammengepresst wird, dass es dicht zwischen das Verbindungselement und der die Öffnung umgebenden Wandung eingepresst wird.

Das Eindringen von Feuchtigkeit in den Querträger und ein unter Verwendung des Querträgers aufgebautes Bodenelement kann auch dadurch verhindert werden, dass in die Öffnung für das Verbindungselement eine Dichtung eingesetzt ist. Eine solche Dichtung kann gleichzeitig so positioniert sein, dass sie den Rand einer in die untere Decklage eingeformten, zum Durchführen des Befestigungselements benötigten Öffnung gegenüber der Umgebung dicht abdeckt. Schließlich kann die Dichtung auch gewährleisten, dass beim Verkleben des Querträgers auf der unteren Decklage kein Klebstoff in die Öffnung zum Durchführen des Befestigungselements gelangt. Diese Dreifach-Funktion der Dichtung kann selbstverständlich auch durch drei separate Dichtungen übernommen werden. Allerdings ist der dazu erforderliche Aufwand wesentlich höher als bei einer erfindungsgemäßen Mehrfachnutzung einer einzigen Dichtung.

Alternativ oder ergänzend zur Verwendung einer gesonderten Dichtung zum Abdichten der zum Durchführen des jeweiligen Verbindungselements erforderlichen Öffnung von Querträger und Bodenelement kann das Verbindungselement auch als Schraubenbolzen ausgebildet sein, der durch die in die untere Decklage des Bodenelements eingebrachte Öffnung und durch die korrespondierende, in den Querträger eingebrachte, zum Anschlusselement führende Öffnung gesteckt ist, wobei das Verbindungselement einen Schaftabschnitt aufweist, in dessen Bereich das Verbindungselement mit Presssitz in der zum Anschlusselement führenden Öffnung des Querträgers sitzt.

Weist das Verbindungselement zusätzlich einen zur Anlage an die freie Außenseite der unteren Decklage kommenden Kopf auf, so kann eine Selbstzentrierung des Verbindungselements dabei auf einfache Weise dadurch erreicht werden, dass zwischen dem Kopf und dem Schaftabschnitt ein in Richtung des Schaftabschnitts konisch zulaufender Zentrierungsabschnitt ausgebildet ist. Selbstverständlich kann auch in diesem Fall eine zusätzliche Dichtung vorgesehen sein, um die in das Bodenelement führende, das Verbindungselement aufnehmende Öffnung gegenüber der Umgebung abzudichten.

Als Material für die Herstellung des Grundkörpers eines erfindungsgemäßen Querträgers eignen sich alle Materialien, die einen geringen Wärmeausdehnungskoeffizienten aufweisen und gleichzeitig in der Lage sind, die im praktischen Betrieb auf den Querträger wirkenden Kräfte sicher aufzunehmen. Für diesen Zweck bewährt haben sich Holzwerkstoffe, jedoch kann es auch zweckmäßig sein, den Grundkörper des Querträgers aus einem Kunststoffmaterial, aus faserverstärkten Werkstoffen oder einem Mischwerkstoff zu fertigen, wenn sich dazu beispielsweise aus Gründen der Festigkeit oder des Gewichts oder im Hinblick auf eine möglichst geringe Wärmeleitfähigkeit die Notwendigkeit ergibt.

Für das Anschlusselement eignen sich alle Werkstoffe, die ausreichend fest sind, um die auf das Anschlusselement wirkenden Kräfte aufzunehmen. Ein für diesen Zweck besonders geeignetes Material ist Stahl.

Ein erfindungsgemäßes Bodenelement für ein Fahrzeug, wie einen Lastkraftwagen, Auflieger oder Anhänger, weist eine obere Decklage, deren freie Oberfläche eine Ladefläche bildet, auf der eine zu transportierende Last abstellbar ist, eine untere Decklage, die den Abschluss des Bodenelements zur Unterseite des Fahrzeugs hin bildet, und quer zur Längsrichtung des Bodenelements ausgerichtete und beabstandet zueinander angeordneten Querstege auf, die den zwischen den Decklagen vorhandenen Raum in Kammern unterteilen, wobei mindestens einer der Querstege ein Querträger ist, an dem ein Bauteil befestigbar ist. Indem die Querträger eines solchen Bodenelements in der erfindungsgemäßen Weise gestaltet sind, lässt sich ein solches Bodenelement bei praxisgerechten Gebrauchseigenschaften kostengünstig herstellen.

Um sicherzustellen, dass die Klebverbindung zwischen den Querstegen und den Querträgern auch Schubbelastungen standhält, die aus ungünstiger Richtung wirken, kann in die dem Querträger zugeordnete Unterseite der oberen Decklage eine Einsenkung eingeformt sein. In diese greift dann der Querträger mit einem an ihm ausgebildeten Vorsprung, so dass er zusätzlich zu der Klebverbindung auch formschlüssig mit der oberen Decklage verkoppelt ist. Die so geschaffene formschlüssige Verbindung wird dabei bevorzugt so ausgerichtet, dass sie quer zur Längsrichtung des Bodenelements verläuft. Auf diese Weise wird die Belastung der Klebverbindung zwischen der oberen Decklage und dem Querträger durch in Längsrichtung auftretende Schubkräfte auf ein Minimum reduziert.

Nachfolgend wird die Erfindung anhand einer Ausführungsbeispiele darstellenden Zeichnung näher erläutert. Es zeigen jeweils schematisch:

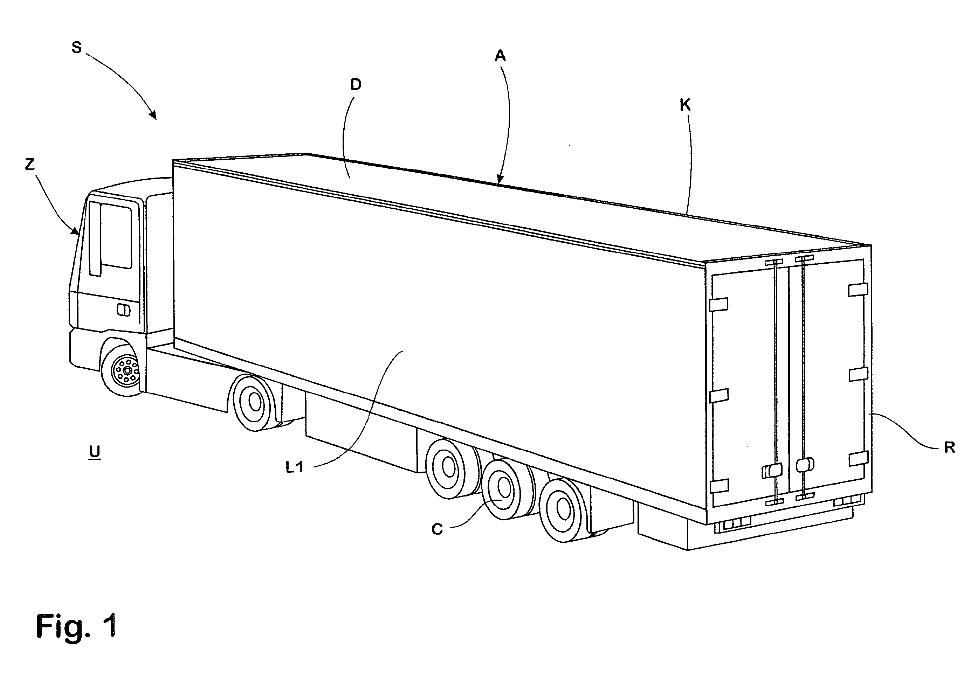

- Fig. 1: einen Sattelzug in einer perspektivischen Ansicht;

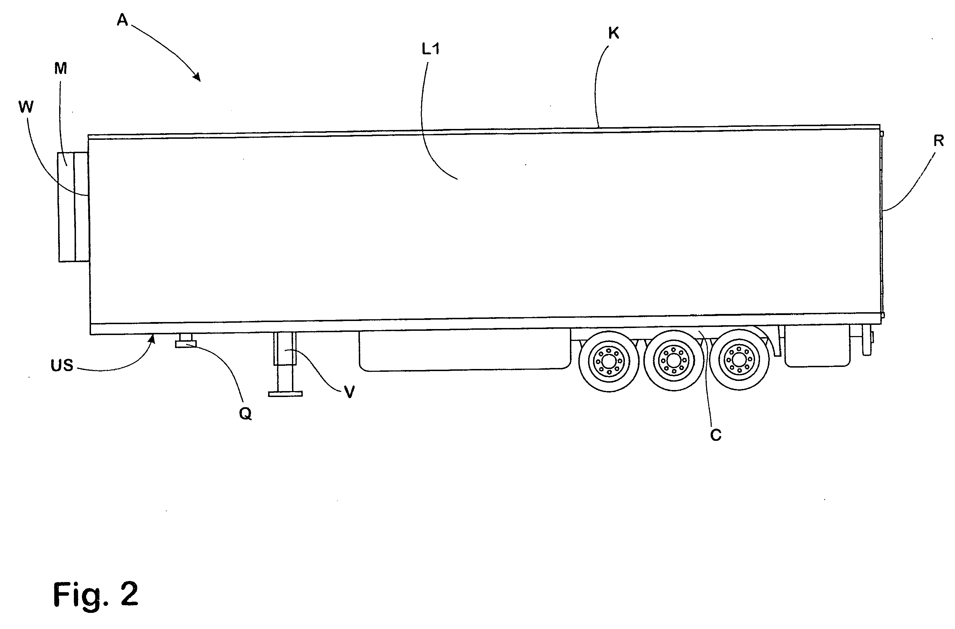

- Fig. 2: den Sattelauflieger des in Fig. 1 dargestellten Sattelzugs in einer seitlichen Ansicht;

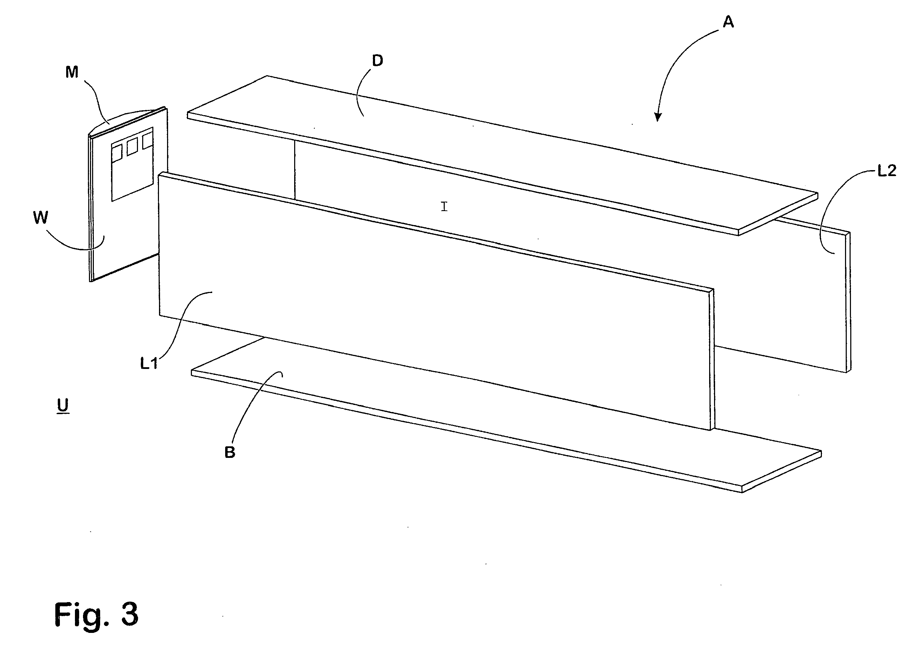

- Fig. 3: den Sattelauflieger in einer perspektivischen Explosionsansicht;
- Fig. 4: einen Ausschnitt eines in dem Auflieger gemäß Fig. 2 verbauten Bodenelements in einem Längsschnitt;
- Fig. 4a: einen weiteren Ausschnitt des in Fig. 2 gezeigten Bodenelements in einem Längsschnitt;

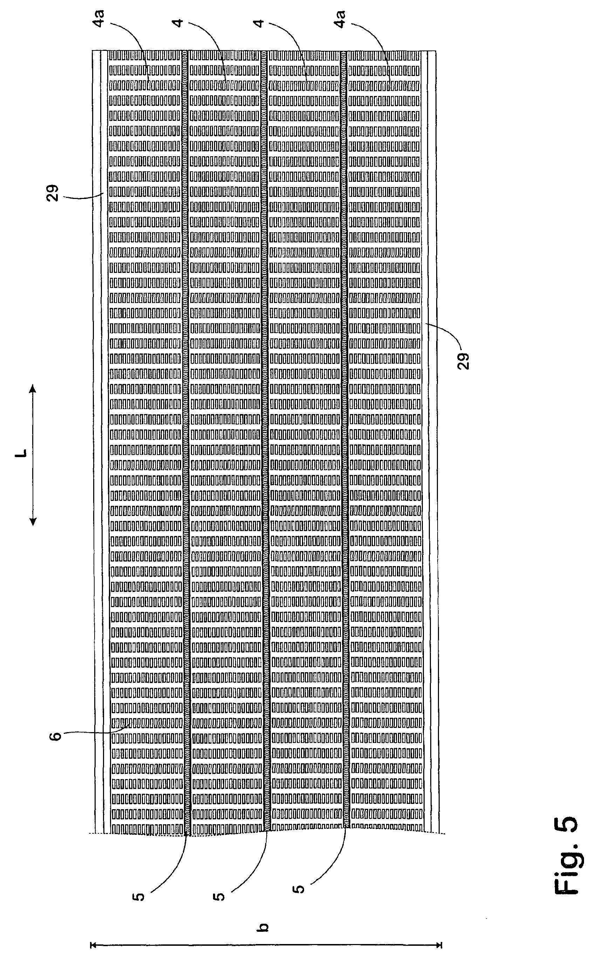

- Fig. 5: den Ausschnitt gemäß Fig. 4 in Draufsicht;

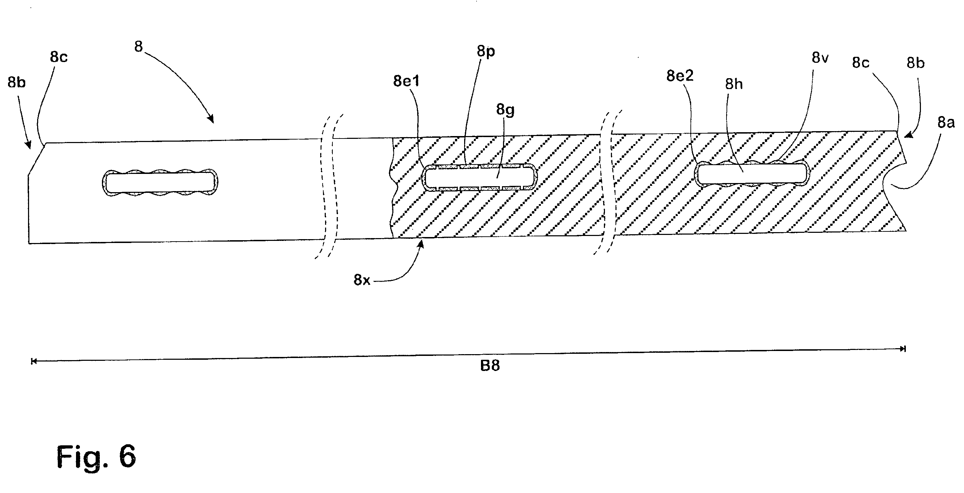

- Fig. 6: einen Querträger für das Bodenelement in seitlicher, teilweise aufgebrochener Ansicht;
- Fig. 7: den Querträger gemäß Fig. 6 in einer ausschnittsweisen, längsgeschnittenen Ansicht;

- Fig 7a: den Querträger gemäß Fig. 6 in einer weiteren ausschnittsweisen, längsgeschnittenen Ansicht;
- Fig. 8: den Querträger gemäß Fig. 6 in einem Schnitt entlang der in Fig. 7 eingezeichneten Schnittlinie X1-X1;
- Fig. 9: einen Quersteg bei der Montage auf der unteren Decklage des Bodenelements B.

Beim hier beschriebenen Beispiel besteht der als Kühltransporter ausgelegte Sattelzug S in an sich bekannter Art aus einer Zugmaschine Z und einem Sattelauflieger A.

Der Sattelauflieger A umfasst einen Kofferaufbau K, der auf einem Fahrwerkschassis C montiert ist. Der Kofferaufbau K isoliert den von ihm umgebenen Innenraum I gegen die Wärme der Umgebung U. Dabei ist der Kofferaufbau K aus den Grundelementen "Bodenelement B", "Dach D", "Längsseitenwänden L1,L2", "Stirnwand W", die der Zugmaschine Z zugeordnet ist, und "Rückwand R" zusammengesetzt, die zur Stirnwand W gegenüberliegend angeordnet ist. An der Stirnwand W ist ein Kühlgerät M montiert, das den Innenraum I des Kofferaufbaus K kühlt. In der Rückwand R sind die Türen vorgesehen, über die das Be- und Entladen des Kofferaufbaus K erfolgt. Zum Abstützen des vom Zugfahrzeug Z abgekuppelten Sattelaufliegers A ist ein im vorderen Teil an der Unterseite US des Bodenelements B befestigtes Stützwindwerk V vorgesehen.

Die Längsseitenwände L1,L2 können in an sich bekannter Weise aus hier nicht dargestellten Einzelsegmenten zusammengesetzt sein, deren in Längsrichtung L des Kofferaufbaus K gemessene Länge jeweils einem Bruchteil der Gesamtlänge der Längsseitenwände L1,L2 entspricht, während ihre Höhe gleich der Höhe der Längsseitenwände L1,L2 ist. Wenn nachfolgend von Längsseitenwänden L1,L2 die Rede ist, gelten die betreffenden Erläuterungen für einstückig ausgebildete Längsseitenwände genauso wie für aus Einzelsegmenten zusammengesetzte.

Das Bodenelement B weist eine obere Decklage 1 auf, die durch eine obere, dem Innenraum I des Kofferaufbaus K zugeordnete Deckschicht 2 und einer die Deckschicht 2 tragenden Tragschicht 3 gebildet ist.

Die Deckschicht 2 ist aus separat vorgefertigten Formteilen 4,4a zusammengesetzt, die als Flachprofile vorgefertigt sind. In die Formteile 4,4a können Formelemente, wie Nutschienen 4b, hier nicht gezeigte Gewindeöffnungen oder vergleichbare Elemente zum Befestigen und Anschlagen von Zurr- oder anderen Befestigungsmitteln eingearbeitet sein. Diese sind dabei bevorzugt so ausgebildet, dass die Ladefläche F im Wesentlichen eben und frei von über sie hinausstehenden Vorsprüngen ausgebildet ist. Die Formteile 4,4a erstrecken sich in Längsrichtung L des Bodenelements B über dessen gesamte Länge und nehmen jeweils einen Bruchteil seiner Breite b ein.

An ihren Längsrändern sind die Formteile 4,4a mit dem jeweils benachbart angeordneten Formteil 4,4a verschweißt. Die Verschweißungen 5 der Formteile 4,4a sind beispielsweise als Reibrührschweißung ausgeführt. Dieses Schweißverfahren erlaubt es auf besonders kostengünstige und effektive Weise, die mit ihren Längsrändern stumpf aneinander liegenden flachen Aluminium-Formteile 4,4a über die gesamte Länge des Bodenelements unter weitestgehender Vermeidung von erwärmungsbedingten Verformungen der miteinander zu verbindenden Formteile 4,4a miteinander zu verbinden. Indem dabei die Reibrührschweißungen 5 von der der Tragschicht 3 der Decklage 1 zugeordneten Seite der Deckschicht 2 her durchgeführt wird, die Wurzelseite der Reibrührschweißungen 5 also der Ladefläche F zugeordnet sind, können die vom Innenraum I her sichtbaren Schweißzonen 5 weitestgehend glatt ausgeführt werden.

Alternativ zu einem Aluminiumwerkstoff können die Formteilen 4,4a auch aus einem Stahlblech gefertigt sein. Die einzelnen Formteile 4,4a können dazu beispielsweise durch Rollformen, Walzen oder ein anderes kosteneffektives Verfahren aus entsprechend geformten Blechzuschnitten geformt werden.

Auf ihrer freien Oberseite sind die Formteile 4,4a mit einer regelmäßigen Profilierung 6 versehen. Diese verhindert, dass Personen ausrutschen, die die durch die freie Oberfläche der Deckschicht 2 gebildete Ladefläche F des Bodenelements B beispielsweise zum Be- und Entladen der in dem Sattelauflieger A jeweils zu transportierenden Last T begehen.

Im Fall, dass die Formteile 4,4a aus einem Aluminiumwerkstoff beispielsweise durch Extrusion erzeugt worden sind, kann das Profil in Form von sich in Längsrichtung der Formteile erstreckenden Rillen unmittelbar in die die Ladefläche F bildende Oberfläche der Formteile 4,4a eingeformt werden. Quer zur Längsrichtung L der Formteile 4,4a sich erstreckende Rillen können mittels geeigneter Werkzeuge bei einer Warmformgebung in die betreffende Oberfläche eingeformt werden. Alternativ können diese Rillen auch durch geeignete Spanabhebende Verfahren, beispielsweise Sägen oder Stoßen, in die Oberfläche der Formteile eingeschnitten werden.

Im Fall, dass die Formteile 4,4a aus Stahlblechen geformt sind, kann an den Formteilen 4,4a ebenfalls auf einfache Weise ein Profil in Form von sich über die Länge der Formteile 4,4a oder quer dazu ausgerichteten Rillen gebildet werden. Im Querschnitt gesehen weisen die Formteile dabei bevorzugt einen Querschnitt auf, bei dem die Grundfläche der Rillen jeweils ebenso rechtwinklig zu den an die Grundfläche angrenzenden Seitenflächen ausgerichtet sind wie die das zu transportierende Gut unmittelbar abstützenden Aufstandfläche zu diesen Seitenflächen. Die Tiefe der Rillen ist dabei optimalerweise so ausgelegt, dass auch bei voll beladener Ladefläche F ausreichende Luftmengen durch Rillen zirkulieren können, um beispielsweise dort sich ansammelnde Feuchtigkeit sicher zu entfernen.

Die aus den Formteilen 4,4a zusammengesetzte Deckschicht 2 ist vollflächig mit der aus einem Holzwerkstoff bestehenden Tragschicht 3 der oberen Decklage 1 verklebt. Die Dicke D3 der Tragschicht ist dabei um ein Vielfaches größer als die Dicke der Deckschicht 2. Der wesentliche Beitrag zur Tragfähigkeit der oberen Deckschicht 2 wird dementsprechend von der Tragschicht 3 übernommen.

Die Tragschicht 3 ist auf Querstegen 7,7a,7b,8 abgestützt. Die Querstege 7,7a,7b,8 sind jeweils aus einem Holzwerkstoff hergestellt. Sie weisen eine quaderförmige, langgestreckte Grundform auf und erstrecken sich quer zur Längsrichtung L ausgerichtet über die Breite b des Bodenelements B. Ihre Dicke liegt typischerweise im Bereich von 9 - 15 mm.

An den Stellen, an denen Anbauteile, wie beispielsweise die Längsträger 9 des Fahrwerkchassis C oder der Träger des Stützwindwerks V, an der Unterseite US des Bodenelements B befestigt werden, sind die Querstege als Querträger 8 ausgebildet.

An ihrer der oberen Decklage 1 zugeordneten ebenen Oberseite sind die Querstege 7,7a,7b und Querträger 8 mit der ihnen zugewandten Unterseite der Tragschicht 3 der oberen Decklage 1 jeweils verklebt.

Zur lagesicheren Positionierung der Querstege 7,7a,7b und Querträger 8 an der oberen Decklage 1 sind in die Tragschicht 3 von deren Unterseite her Dübelöffnungen 11 eingeformt, in denen Dübel 12 mit ihrem oberen Dübelabschnitt 12a sitzen. Die Dübel 12 stehen dabei mit einem Absatz 12b über die Unterseite der oberen Decklage 1 hinaus. Durch die Höhe des Absatzes 12b ist die Höhe H13 eines Klebespalts 13 definiert, der die zum Verkleben der Querstege 7,7a,7b,8 jeweils benötigte Klebstoffmenge aufnimmt. An den Absatz 12b ist ein unterer Dübelabschnitt 12c angeformt, der koaxial zum Dübelabschnitt 12a ausgerichtet ist, jedoch einen kleineren Durchmesser als der Dübelabschnitt 12a hat.

Jedem Quersteg 7 bzw. Querträger 8 sind mindestens zwei Dübel 12 zugeordnet. In die Oberseite der Querstege 7 und Querträger 8 sind an entsprechender Stelle korrespondierende Öffnungen 14 eingeformt, in die der jeweilige untere Dübelabschnitt 12c des zugeordneten Dübels 12 greift. Die Dübel 12 weisen an ihren Dübelabschnitten 12a,12b jeweils Rastvorsprünge 13 auf, die mit den rauen Wandungen der jeweiligen Dübelöffnung 11,14 unlösbar verrasten.

Um sicherzustellen, dass die Klebverbindung zwischen den Querstegen 7,7a,7b oder den Querträgern 8 und der Tragschicht 3 auch Schubbelastungen standhält, die aus ungünstiger Richtung wirken, sind die Querstege 7,7a,7b und Querträger 8 jeweils zusätzlich formschlüssig mit der Tragschicht 3 verkoppelt. Dazu sind in die Unterseite der Tragschicht 3 der oberen Decklage 1 Einsenkungen 3a in Form von Nuten eingefräst, die quer zur Längsrichtung L des Bodenelements B verlaufen. An den Querstegen 7,7a,7b sind korrespondierend geformte stegartige Vorsprünge 8' ausgebildet, die von der der Tragschicht 3 zugeordneten Oberseite der Querstege 7,7a,7b und Querträger 8 formschlüssig in die Einsenkungen 3a greifen. Abhängig von den im praktischen Betrieb auftretenden Belastungen können jedem Quersteg 7,7a,7b oder Querträger 8 eine oder mehrere Einsenkungen 3a zugeordnet sein, in die der jeweilige Quersteg 7,7a,7b oder Querträger 8 mit einer entsprechenden Zahl von Vorsprüngen 8' greift.

Der Abstand a1,a2,a3 der Querstege 7,7a,7b und der Querträger 8 zueinander variiert entsprechend der Belastungen, die im praktischen Einsatz auf das Bodenelement B wirken. Dementsprechend sind in einem Einfahrbereich G der Ladefläche F, der der Rückwand R zugeordnet ist und beim Be- und Entladen von einem hier nicht gezeigten Staplerfahrzeug befahren wird, die Querstege 7a in einem kleineren Abstand a1 angeordnet als die außerhalb des Einfahrbereichs G angeordneten Querstege 7 oder Querträger 8, die in einem größeren Abstand a2 aufgestellt sind. In entsprechender Weise sind die Querstege 7b oder die Querträger 8 in dem Bereich des Bodenelements B, in dem eine im praktischen Betrieb auf dem Zugfahrzeug Z aufliegende Scheuerplatte 14 in der unteren Decklage 10 des Bodenelements B ausgebildet ist, erforderlichenfalls in einem verminderten Abstand a3 positioniert, um die dort auftretenden Belastungen sicher aufnehmen zu können. Der Abstand a1 der Querstege 7a im Einfahrbereich G beträgt typischerweise 50 -100 mm, insbesondere 60 - 80 mm, während der Abstand a2 der Querstege 7 in den normal belasteten Bereichen typischerweise bei 100 - 180 mm, insbesondere bei 120 - 160 mm, und der Abstand a3 der Querstege 7b und Querträger 8 im Bereich der Scheuerplatte 14 beispielsweise bei 80 - 140 mm, insbesondere 100 - 120 mm, liegt.

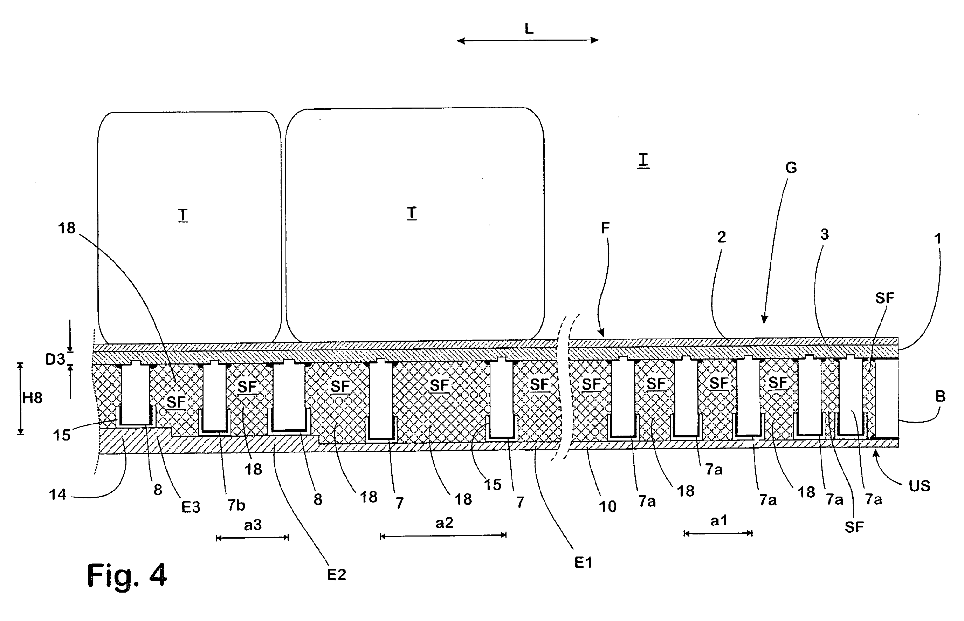

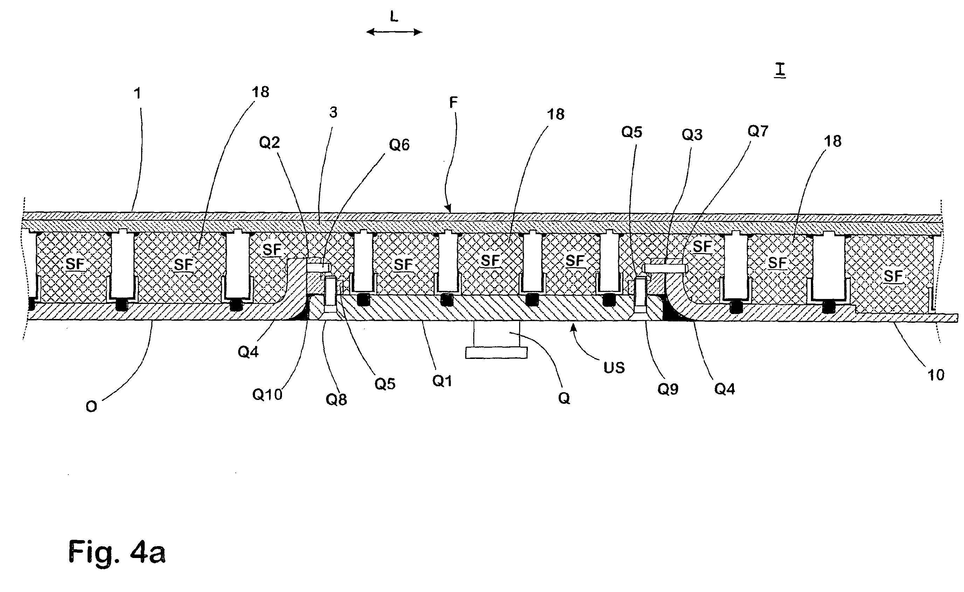

Die untere Decklage 10 des Bodenelements B ist aus Stahlblech hergestellt. In den in Fig. 4 allgemein mit "E1" bezeichneten Bereichen, die im praktischen Einsatz keinen besonderen Belastungen unterliegen, beträgt die Dicke des Stahlblechs 0,6 - 0,8 mm, wogegen die untere Decklage 10 in den in Fig. 4 allgemein mit "E2" und "E3" bezeichneten Bereichen, die im praktischen Einsatz höher belastet sind, Dicken von 2 - 4 mm oder 6 - 8 mm aufweist.

Als Stahlblechmaterial für die untere Decklage 10 kommen aus dem Bereich der Automobilkarosseriefertigung bekannte Stahlbleche in Frage, die eine hohe Festigkeit bei ausreichender Korrosionsbeständigkeit besitzen. Solche Bleche sind üblicherweise mit einer metallischen Korrosionsschutzschicht versehen, wie beispielsweise einer Feuerverzinkung oder Feueraluminierung. Darüber hinaus können sie zur weiteren Verbesserung ihres Korrosionsschutzes mit einem organischen Überzug versehen sein. Solches Stahlmaterial steht in der Praxis als so genanntes "Coil-Coating-Material" zur Verfügung.

Zur Sicherung des Halts der Querstege 7,7a,7b und Querträger 8 auf der unteren Decklage 10 sind dort Anschläge 15 in Form von im Querschnitt U-förmigen Aufnahmen vorgesehen. Die Anschläge 15 können als separate Blechteile vorgefertigt sein, die an der dafür vorgesehenen Stelle an der unteren Decklage 10 beispielsweise durch Punktschweißen befestigt werden. Alternativ ist es auch denkbar, die Anschläge 15 direkt aus dem Blech der unteren Decklage 10 zu formen.

Die lichte Weite der U-förmigen Anschläge 15 ist so bemessen, dass zwischen den in den Anschlägen 15 sitzenden Querstegen 7,7a,7b bzw. Querträgern 8 und den frei von der unteren Decklage 10 abstehenden Schenkeln 15a,15b der Anschläge 15 ausreichend Raum vorhanden ist, um den Klebstoff J aufzunehmen, mit dem die Querstege 7,7a,7b und Querträger 8 in den Anschlägen 15 mit der unteren Decklage 10 verklebt sind.

Um eine gleichmäßige Verteilung des vor dem Einsetzen der Querstege 7,7,a,7b und Querträger 8 in die Anschläge 15 eingefüllten Klebstoffs J zu sichern, kann an der der unteren Decklage 10 zugeordneten Unterseite der Querstege 7,7a,7b und Querträger 8 ein Abteilelement 16 vorgesehen sein, das sich entlang der Mittellinie über die gesamte Unterseite erstreckt und beim Einsetzen der Querstege 7,7a,7b bzw. Querträger 8 in die Anschläge 15 den dort bereits vorhandenen Klebstoff J in zwei im Wesentlichen gleiche Hälften teilt. Auf diese Weise wird der Klebstoff J gezwungen, zu gleichen Teilen in den zwischen dem einen Schenkel 15a und den zwischen anderem Schenkel 15b und dem jeweiligen Quersteg 7,7a,7b bzw. Querträger 8 vorhandenen Freiraum aufzusteigen. Im Ergebnis wird so eine vollflächige Verklebung der Querstege 7,7a,7b und Querträger 8 in den Anschlägen 15 sichergestellt.

Die Querstege 7 und Querträger 8 teilen den zwischen der oberen Decklage 1 und der unteren Decklage 10 begrenzten Raum in Kammern 18, die sich über die Breite b des Bodenelements B erstrecken und seitlich jeweils durch einen der Querstege 7,7a,7b bzw. Querträger 8 begrenzt sind.

Die Kammern 18 sind vollständig mit einer Schaumfüllung SF gefüllt, die aus handelsüblichem Polyurethanschaum gebildet ist. Dieser ist so ausgelegt, dass er allenfalls einen untergeordneten Beitrag zur Tragfähigkeit des Bodenelements B leistet.

Um eine gleichmäßige Füllung der Kammern 18 sicherzustellen, ist in die Querstege 7,7a,7b und Querträger 8 jeweils mindestens eine Ausnehmung 7c,8a eingeformt, über die es beim Befüllen der Kammern 18 mit dem dann noch flüssigen Schaum zu einem Volumenausgleich zwischen den Kammern 18 kommen kann. Bevorzugt ist die jeweilige Ausnehmung 7c,8a dazu an demjenigen Ende der Querstege 7,7a,7b bzw. Querträger 8 angeordnet, der der Längsseite des Bodenelements B zugeordnet ist, an der die Befüllung der Kammern 18 mit Schaum erfolgt.

Die beiden oberen Eckbereiche 8b, an denen die der oberen Decklage 1 zugeordnete Oberseite in die jeweilige Schmalseite der Querstege 7,7a,7b bzw. Querträger 8 übergeht, sind jeweils so abgeschrägt, dass die gedachten Verlängerungen der dort gebildeten Schrägflächen 8c spitzdachförmig aufeinander zulaufen.

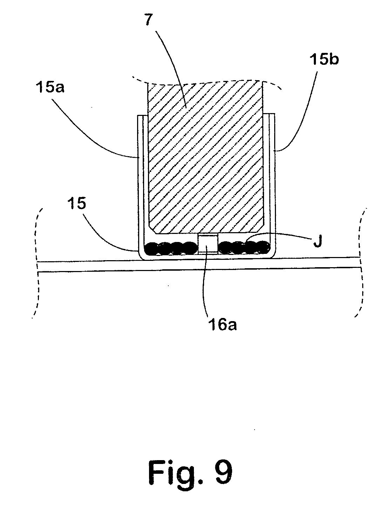

Die Ausnehmung 8a, Eckbereiche 8b und Schrägflächen 8c sind in Fig. 9 exemplarisch für einen Querträger 8 dargestellt, finden sich aber genauso bei den Querstegen 7,7a,7b.

Die Querträger 8 weisen einen Grundkörper 8d auf, der wie die Querstege 7,7a,7b aus Holzwerkstoff hergestellt ist. Der Grundkörper 8d weist bei gleicher Höhe H8 und Breite B8 wie die einfachen Querstege 7,7a,7b eine größere Dicke D8 auf. Auf diese Weise können die Querträger 8 die auf ihnen im praktischen Betrieb wirkenden Lasten sicher aufnehmen.

Alternativ zur Verwendung eines Holzwerkstoffs können die Querstege 7,7a,7b und der Grundkörper der Querträger 8 auch aus einem anderen Werkstoff, wie beispielsweise Kunststoff, hergestellt sein. Dies kann einerseits aus Kostengründen oder Gründen der Verfügbarkeit der benötigten Holzwerkstoffe angezeigt sein. Andererseits kann durch die Wahl alternativer Werkstoffe für die Querstege 7 und Querträger 8 auch die Gefahr der Entstehung von Wärmebrücken im Bereich der Querträger 7 und Querträger 8 vermindert werden. Zu diesem Zweck denkbar ist es auch, einen Holzwerkstoff mit einem stark wärmeisolierenden Werkstoff zu kombinieren oder die Querstege 7,7a,7b oder Querträger 8 aus einem faserverstärkten Mischwerkstoff zu fertigen.

In den Grundkörper 8d der Querträger 8 sind an den Stellen, an denen der jeweilige Querträger 8 beispielsweise mit den Längsträgern 9 des Fahrwerkschassis C verschraubt ist, Ausnehmungen 8e1,8e2 eingeformt. Die Ausnehmungen 8e1,8e2 sind jeweils als Sacklochöffnungen ausgebildet, die zu einer der Längsseiten 8f des Grundkörpers 8d geöffnet und im Übrigen vollständig vom Material des Grundkörpers 8d umgeben sind. Dabei weisen die Ausnehmungen 8e1,8e2 eine langgestreckte Form auf.

In den Ausnehmungen 8e1,8e2 sitzt jeweils ein Anschlusselement 8g,8h, das jeweils ein geringeres Volumen einnimmt als die zugeordnete Ausnehmung 8e1,8e2.

Das Anschlusselement 8g besitzt eine an die langgestreckte Form der ihm zugeordneten Ausnehmung 8e1 angepasste plattenförmige Grundform. An seiner Ober- und Unterseite 8i,8j sind als Abstandhalter 8k dienende, in regelmäßigen Abständen beabstandet zueinander angeordnete Vorsprünge ausgebildet, durch die das Anschlusselement 8g jeweils an den zugeordneten Innenflächen 81,8m der Ausnehmung 8e1 abgestützt ist. Auf diese Weise ist das Anschlusselement 8g in der Ausnehmung 8e1 so abgestützt, dass ober- und unterhalb des Anschlusselements 8g ein Spalt 8n1,8n2 von definierter Höhe gebildet ist. Genauso ist seitlich des Anschlusselements 8g innerhalb der Ausnehmung ein Raumabschnitt 8o1,8o2 vorhanden, der ebenfalls nicht von dem Anschlusselement 8g gefüllt ist. Die Spalte 8n1,8n2 und die Raumabschnitte 8o1,8o2 bilden gemeinsam ein nicht von dem Anschlusselement 8g eingenommenes Restvolumen der Ausnehmung 8e1. Dieses Restvolumen ist mit einer ausgehärteten Zusatzmasse 8p gefüllt, bei der es sich beispielsweise um einen Kleber handelt, wie er zum Verkleben des Querträgers 8 auf der unteren Decklage des Bodenelements verwendet wird.

Anhand der Ausnehmung 8e2 und des darin sitzenden Anschlusselements 8h wird eine alternative Möglichkeit der Lagefixierung des Anschlusselements 8h erläutert. Auch das Anschlusselement 8h weist eine langgestreckte plattenartige Form auf. Die Ober- und Unterseiten 8q1,8q2 des Anschlusselements 8h sind dabei jedoch im Wesentlichen eben ausgebildet. Dagegen sind an den langen Innenflächen 8r1,8r2 der Ausnehmung 8e2 jeweils wellenähnliche, quer zur Längserstreckung der Ausnehmung 8e2 ausgerichtete Vorsprünge 8s1,8s2 eingefräst, die das Anschlusselement 8h in einer definierten Mittellage in der Ausnehmung 8e2 halten. Auf diese Weise sind auch zwischen der Oberseite 8q1 und der zugeordneten Innenfläche 8r1 sowie der Unterseite 8q2 des Anschlusselements 8h und der zugeordneten Innenfläche 8r2 der Ausnehmung 8e2 jeweils Spalte definierter Höhe gebildet. Gleichzeitig sind auch in diesem Fall seitlich des Anschlusselements 8h Raumabschnitte der Ausnehmung 8e2 vorhanden, die nicht durch das Anschlusselement 8h eingenommen werden. Die Spalte bilden gemeinsam mit den Raumabschnitten ein Restvolumen, das auch hier mit einer ausgehärteten Zusatzmasse 8v gefüllt ist, bei der es sich wiederum um eine aushärtende Klebermasse handelt. Die Ausnehmung 8e1 ist dabei mittels eines hier nicht dargestellten Fräswerkzeuges erzeugt worden, das in Längsrichtung der Ausnehmung 8e2 gesehen in einer zickzackartigen Wellenbewegung geführt worden ist. Auf diese Weise sind die Vorsprünge 8s1,8s2 entstanden, von die oberen Vorsprünge 8s1 jeweils in ein Tal zwischen den unteren Vorsprüngen 8s2 zeigen und umgekehrt.

Zur Montage der Anschlusselemente 8g,8h in den Ausnehmungen 8e1,8e2 wird bei noch leerer Ausnehmung 8e1,8e2 und auf seiner geschlossenen Längsseite liegendem Querträger 8 ein bestimmtes Volumen an Zusatzmasse 8p bzw. 8v in die Ausnehmungen 8e1,8e2 gegeben. Anschließend wird das jeweilige Anschlusselement 8h,8g in die zugeordnete Ausnehmung 8e1,8e2 gedrückt. Dabei verdrängt das Anschlusselement 8h,8g die dort vorhandene Zusatzmasse 8p,8v, die daraufhin selbstständig in den Spalten 8n1,8n2 und den Raumabschnitten 8o1,8o2 der jeweiligen Ausnehmung 8e1,8e2 aufsteigt. Die in die Ausnehmungen 8e1,8e2 gefüllte Menge an Zusatzmasse 8p bzw. 8v ist dabei so bemessen, dass bei vollständig in der jeweiligen Ausnehmung 8e1,8e2 sitzendem Anschlusselement 8h,8g ein geringes Volumen an Zusatzmasse 8p,8v aus der Ausnehmung 8e1,8e2 herausquillt. Auf diese Weise ist gewährleistet, dass das jeweils nicht von dem Anschlusselement 8h,8g eingenommene Restvolumen der Ausnehmungen 8e1,8e2 vollständig durch die Zusatzmasse 8p,8v gefüllt ist.

In die Anschlusselemente 8g,8h ist jeweils eine Gewindebohrung eingeformt. In diese ist jeweils eine als Verbindungselement dienende Schraube 28 geschraubt, mit dem der jeweilige Längsträger 9 an dem Bodenelement B befestigt ist.

Die Schrauben 28 sind dabei jeweils durch eine Öffnung 8w geführt, die von der Aufstandfläche 8x des Querträgers 8 ausgehend in den Grundkörper 8d des Querträgers 8 eingeformt sind. Sie weisen jeweils einen Gewindeabschnitt 28a auf, der in die zugeordnete Gewindeöffnung der Anschlusselemente 8g,8h eingeschraubt ist. Daran schließt sich ein Schaftabschnitt 28b an, dessen Durchmesser im unmontierten Zustand um ein bestimmtes Übermaß größer ist als die lichte Weite der zugeordneten Öffnung 8w. An den Schaftabschnitt 28b schließt sich ein ausgehend von dem Schaftabschnitt 28b sich konisch erweiternder Zentrierabschnitt 28c an, der in den Schraubenkopf 28d übergeht. Durch den Zentrierabschnitt 28c zentriert sich die Schraube 28 bei ihrer Montage selbsttätig in der Öffnung 8w. Dabei wird der Schaftabschnitt 28b in die Öffnung 8w eingepresst, so dass zwischen der Umfangsfläche des Schaftabschnitts 28b und der an ihm anliegenden Innenfläche der Öffnung 8w eine Pressung herrscht, durch die das Eindringen von Feuchtigkeit in die Öffnung 8w verhindert wird. Eine zwischen der dem Bodenelement B zugeordneten Unterseite des Schraubenkopfes und der dem Träger 9 liegende Dichtung 28e dichtet die Öffnung 8w zusätzlich gegenüber der Umgebung ab.

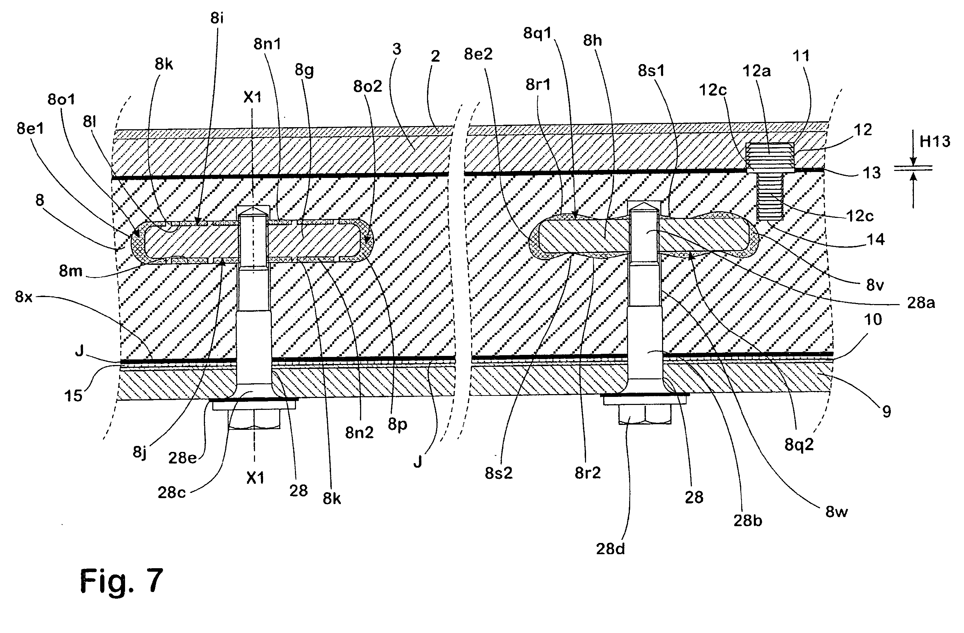

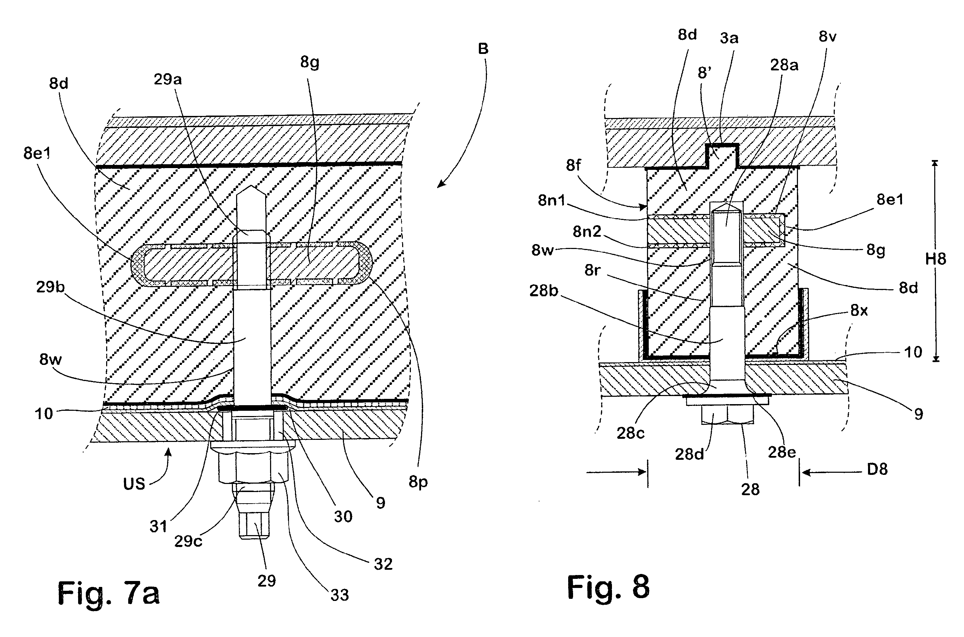

In Fig. 7a ist eine weitere Ausgestaltung der Erfindung dargestellt, mit der sich die in der Praxis auftretenden Toleranzen besonders gut ausgleichen lassen. In diesem Fall sind die Ausnehmung 8e1 und das Anschlusselement 8g wie für das in Fig. 7 dargestellte Ausführungsbeispiel ausgebildet und das in der Ausnehmung 8e1 verbliebene Restvolumen in entsprechender Weise mit der Zusatzmasse 8p gefüllt. Als Verbindungselement ist hier jedoch ein Stehbolzen 29 in die Öffnung 8w eingeschoben, der mit seinem oberen Gewindeabschnitt 29a in die Gewindeöffnung des Anschlusselements 8g eingeschraubt ist. Der Schaftabschnitt 29b des Verbindungselements 29 weist dabei ebenfalls ein geringes Übermaß gegenüber der Öffnung 8w auf, so dass auch der Stehbolzen 29 im Bereich seines Schaftabschnitts mit einem Presssitz in der Öffnung 8w sitzt.

In die untere Decklage 10 ist bei der in Fig. 7a dargestellten Ausführung von der Unterseite US her eine kreisrunde Einsenkung 30 eingedrückt, in der eine scheibenförmige Ringdichtung 31 sitzt. Die Dichtung 31 dichtet die Öffnung 8w zusätzlich gegen das Eindringen von Feuchtigkeit ab. Der Stehbolzen 29 ist mit seinem unteren Gewindeabschnitt 29c durch die Öffnung der Scheibendichtung 31 und durch ein in den Längsträger 9 eingeformtes Langloch 32 geführt, welches es erlaubt, beim Aufsetzen des Bodenelements B auf den Längsträger 9 Längentoleranzen auszugleichen. Durch eine auf den Gewindeabschnitt 29c aufgeschraubte, gegen die freie Unterseite des Längsträgers 9 wirkende Mutter 33 ist der Stehbolzen 29 und damit das Bodenelement B gegen den Längsträger 9 verspannt.

Die Anschlusselemente 8g,8h nehmen die von den Verbindungselementen 28,29 übertragenen Kräfte auf und leiten sie zum überwiegenden Teil als Druckkräfte in den Grundkörper 8d der Querträger 8. Beim Einschrauben der Schrauben 28,29 in die Gewindeöffnung des zugeordneten Anschlusselements 8g,8h sowie im praktischen Einsatz stellt die ausgehärtete Zusatzmasse 8p,8v dabei jeweils sicher, dass sich das Anschlusselement 8g,8h nicht in der jeweiligen Ausnehmung 8e1,8e2 um die Achse der zugeordneten Verbindungselemente 28,29 verdreht. Die Anschlusselemente 8g,8h sind so auch unter ungünstigen Belastungen stets verdrehsicher in den Ausnehmungen 8e1,8e2 gehalten.

## Patentansprüche

1. Querträger für ein Bodenelement (B) eines Fahrzeugs, wie eines Lastkraftwagens, Aufliegers (A) oder Anhängers, mit einem langgestreckten Grundkörper (8d), der eine Aufstandfläche (8x) aufweist, mit der der Querträger (8) auf eine korrespondierende Fläche des Bodenelements (B) aufstellbar ist, und mit einem Anschlusselement (8g,8h), das aus einem festeren Material als der Grundkörper (8d) hergestellt und dazu vorgesehen ist, mittels eines Verbindungselements, wie einer Schraube (28,29), mit einem Bauteil (9) verbunden zu werden, wobei das Anschlusselement (8g,8h) in einer Ausnehmung (8e1,8e2) sitzt, die mit Abstand zur Aufstandfläche (8x) in den Grundkörper (8d) eingeformt ist und die im Betrieb über das Verbindungselement (28,29) übertragene Belastungen auf den Grundkörper (8d) verteilt, **dadurch gekennzeichnet, dass** das von dem Anschlusselement (8g,8h) eingenommene Volumen kleiner ist als das Volumen der Ausnehmung (8e1,8e2) und dass ein zwischen dem Anschlusselement (8g,8h) und den Innenflächen (8l,8m) der Ausnehmung (8e1,8e2) vorhandenes Restvolumen der Ausnehmung (8e1,8e2) mit einer Zusatzmasse (8p,8v) gefüllt ist, die das Anschlusselement (8g,8h) in Bezug auf das Verbindungselement (28,29) verdrehsicher in der Ausnehmung (8e1,8e2) hält.

2. Querträger nach Anspruch 1, **dadurch gekennzeichnet, dass** das Anschlusselement (8g,8h) plattenförmig ausgebildet ist.

3. Querträger nach Anspruch 2, **dadurch gekennzeichnet, dass** sich die Ausnehmung (8e1,8e2) und mit ihr das Anschlusselement (8g,8h) parallel zur Aufstandfläche (8x) erstrecken.

4. Querträger nach einem der voranstehenden Ansprüche, **dadurch gekennzeichnet, dass** das Restvolumen der Ausnehmung (8e1,8e2) vollständig mit der Zusatzmasse (8p,8v) gefüllt ist.

5. Querträger nach einem der voranstehenden Ansprüche, **dadurch gekennzeichnet, dass** die Zusatzmasse (8p,8v) ein Dichtstoff ist.

6. Querträger nach einem der voranstehenden Ansprüche, **dadurch gekennzeichnet, dass** die Zusatzmasse (8p,8v) eine nach dem Einfüllen in die Ausnehmung (8e1,8e2) aushärtende Klebermasse ist.

7. Querträger nach einem der voranstehenden Ansprüche, **dadurch gekennzeichnet, dass** mindestens ein Abstandshalter (8k,8s1,8s2) vorgesehen ist, der das Anschlusselement (8g,8h) in einem bestimmten Abstand von der zugeordneten Innenfläche (81,8m) der Ausnehmung (8e1,8e2) hält.

8. Querträger nach Anspruch 7, **dadurch gekennzeichnet, dass** mindestens ein Abstandhalter (8k) an das Anschlusselement (8g,8h) angeformt ist.

9. Querträger nach einem der voranstehenden Ansprüche, **dadurch gekennzeichnet, dass** mindestens ein Abstandhalter (8s1,8s2) an eine der Innenflächen der Ausnehmung (8e1,8e2) angeformt ist.

10. Querträger nach einem der voranstehenden Ansprüche, **dadurch gekennzeichnet, dass** mindestens an dem Anschlusselement (8g,8h) ein Formelement vorgesehen ist, das formschlüssig mit einem korrespondieren geformten, an einer der Innenflächen der Ausnehmung (8e1,8e2) ausgebildeten Formelement zusammenwirkt.

11. Querträger nach einem der voranstehenden Ansprüche, **dadurch gekennzeichnet, dass** die Ausnehmung (8e1,8e2) als von einer der Längsseiten (8f) des Querträgers (8) zugängliches Sackloch ausgebildet ist.

12. Querträger nach einem der voranstehenden Ansprüche, **dadurch gekennzeichnet, dass** ausgehend von der Aufstandfläche (8x) in den Querträger (8) eine in die Ausnehmung führende Öffnung (8w) zum Durchführen des Verbindungselements (28,29) eingeformt ist.

13. Querträger nach Anspruch 12, **dadurch gekennzeichnet, dass** die Öffnung (8w) für das Verbindungselement (28) durch eine Dichtung (28e) abgedichtet ist.

14. Bodenelement für ein Fahrzeug, wie einen Lastkraftwagen, Auflieger (A) oder Anhänger,
- mit einer oberen Decklage (1), deren freie Oberfläche eine Ladefläche (F) bildet, auf der eine zu transportierende Last (T) abstellbar ist,
- mit einer unteren Decklage (10), die den Abschluss des Bodenelements (B) zur Unterseite (US) des Fahrzeugs (S) hin bildet, und
- mit quer zur Längsrichtung (L) des Bodenelements (B) ausgerichteten und beabstandet zueinander angeordneten Querstegen (7,7a,7b,8), die den zwischen den Decklagen (1,10) vorhandenen Raum in Kammern (18) unterteilen,
- wobei mindestens einer der Querstege ein Querträger (8) ist, an dem ein Bauteil (9) befestigbar ist
**dadurch gekennzeichnet, dass** der mindestens eine Querträger (8) gemäß einem der Ansprüche 1 bis 13 ausgebildet ist.

15. Bodenelement nach Anspruch 14, **dadurch gekennzeichnet, dass** in die dem Querträger (8) zugeordnete Unterseite der oberen Decklage (1) eine Einsenkung (3a) eingeformt ist und **dass** der Querträger (8) einen Vorsprung (8u) aufweist, der formschlüssig in die Einsenkung (3a) greift.

16. Bodenelement nach einem der Ansprüche 14 oder 15, **dadurch gekennzeichnet, dass** als Verbindungselement zum Verbinden des Querträgers (8) mit einem Bauteil (9) ein Schraubbolzen (28,29) vorgesehen ist, der durch eine in die untere Decklage (10) eingebrachte Öffnung und durch eine in den Querträger eingebrachte, zum Anschlusselement (8g,8h) führende Öffnung (8w) gesteckt ist, und d a s s das Verbindungselement (28) einen Schaftabschnitt (28b) aufweist, in dessen Bereich das Verbindungselement (28) mit Presssitz in der zum Anschlusselement (8g,8h) führenden Öffnung (8w) des Querträgers (8) sitzt.

17. Bodenelement nach Anspruch 16, **dadurch gekennzeichnet, dass** das Verbindungselement (28) einen zur Anlage an die freie Außenseite der unteren Decklage (10) kommenden Kopf (28d) aufweist und dass zwischen dem Kopf (28d) und dem Schaftabschnitt (28b) ein in Richtung des Schaftabschnitts (28) konisch zulaufender Zentrierungsabschnitt (28c) ausgebildet ist.

18. Bodenelement nach einem der Ansprüche 14-17, **dadurch gekennzeichnet, dass** in die untere Decklage (10) eine Einsenkung (32) eingeformt ist, die die Öffnung (8w) für das Verbindungselement (29) umgibt und in der eine Dichtung (30) sitzt.

## Claims

1. Cross member for a floor element (B) of a vehicle, such as a lorry, trailer (A) or semi-trailer, having an elongated base body (8d), which has a contact surface (8x), with which the cross member (8) can be set up on a corresponding surface of the floor member (B), and having a connection element (8g, 8h), which is manufactured from a more solid material than the base body (8d) and is provided to be connected to a component (9) by means of a connecting element such as a bolt (28, 29), wherein the connection element (8g, 8h) is located in a recess (8e1, 8e2), which is formed into the base body (8d) at a distance to the contact surface (8x) and distributes loads carried during operation via the connecting element (28, 29) on the base body (8d), **characterised in that** the volume taken in by the connection element (8g, 8h) is less than the volume of the recess (8e1, 8e2) and **in that** a residual volume of the recess (8e1, 8e2) present between the connection element (8g, 8h) and the inner surface (81, 8m) of the recess (8e1, 8e2) is filled with an additional mass (8p, 8v), which holds the connection element (8g, 8h) in the recess (8e1, 8e2) in a manner resistant to turning in relation to the connecting element (28, 29).

2. Cross member according to Claim 1, **characterised in that** the connection element (8g, 8h) is designed plate-shaped.

3. Cross member according to Claim 2, **characterised in that** the recess (8e1, 8e2) and therewith the connection element (8g, 8h) extend parallel to the contact surface (8x).

4. Cross member according to any one of the preceding claims, **characterised in that** the residual volume in the recess (8e1, 8e2) is completely filled with additional mass (8p, 8v).

5. Cross member according to any one of the preceding claims, **characterised in that** the additional mass (8p, 8v) is a sealant.

6. Cross member according to any one of the preceding claims, **characterised in that** the additional mass (8p, 8v) is an adhesive compound hardening after being filled into the recess (8e1, 8e2).

7. Cross member according to any one of the preceding claims, **characterised in that** at least one spacer (8k, 8s1, 8s2) is provided, which holds the connection element (8g, 8h) at a certain distance from the associated inner surface (81, 8m) of the recess (8e1, 8e2).

8. Cross member according to Claim 7, **characterised in that** at least one spacer (8k) is formed on the connection element (8g, 8h).

9. Cross member according to any one of the preceding claims, **characterised in that** at least one spacer (8s1, 8s2) is formed on one of the inner surfaces of the recess (8e1, 8e2).

10. Cross member according to any one of the preceding claims, **characterised in that** at least on the connection element (8g, 8h) one form element is provided , which form element interacts in a form-fitting manner with a correspondingly formed form element formed on one of the inner surfaces of the recess (8e1, 8e2).

11. Cross member according to any one of the preceding claims, **characterised in that** the recess (8e1, 8e2) is designed as a blind hole accessible from one of the longitudinal sides (8f) of the cross member (8).

12. Cross member according to any one the preceding claims, **characterised in that** starting from the contact surface (8x) an opening (8w) leading into the recess is formed into the cross member (8) for carrying through the connecting element (28, 29).

13. Cross member according to Claim 12, **characterised in that** the opening (8w) for the connecting element (28) is sealed by a seal (28e).

14. Floor element for a vehicle, such as a lorry, trailer or semi-trailer,
- having an upper cover layer (1), the free surface of which forms a loading surface (F), on which a load to be transported (T) can be placed,
- having a lower cover layer (10), which forms the border of the floor element (B) to the underside (US) of the vehicle (S), and
- having cross webs (7, 7a, 7b, 8) aligned transverse to the longitudinal direction (L) of the floor element (B) and arranged spaced apart from one another, which divide the space present between cover layers (1, 10) into cavities (18),
- wherein at least one of the cross webs is a cross member (8), to which a component (9) can be secured
**characterised in that** the at least one cross member (8) is designed according to any one of claims 1 to 13.

15. Floor element according to Claim 14, **characterised in that** a sinking (3a) is formed into the underside of the upper cover layer (1) associated with the cross member (8) and **in that** the cross member (8) has a projection (8u), which engages in a form-fitting manner with the sinking (3a).

16. Floor element according to Claim 14 or 15, **characterised in that** a screw bolt (28, 29) is provided as connecting element for connecting the cross member (8) to a component (9), which screw bolt is inserted through an opening introduced into the lower cover layer and through an opening (8w) introduced into the cross member, leading to the connection element (8g, 8h), and **in that** the connecting element (28) has a shaft section (28b), in the region of which the connecting element (28) is situated by press fit in the opening (8w) of the cross member (8) leading to the connection element (8g, 8h).

17. Floor element according to Claim 16, **characterised in that** the connecting element (28) has a head (28d) coming to rest on the free outer side of the lower cover layer (10) and **in that** between the head (28d) and the shaft section (28b) is designed a centring section (28c) running conically in the direction of the shaft section (28).

18. Floor element according to any one of Claims 14 to 17, **characterised in that** a sinking (32) is formed into the lower cover layer (10), which sinking surrounds the opening (8w) for the connecting element (29) and in which a seal (30) is located.

## Revendications

1. Traverse pour un élément de plancher (B) d'un véhicule, comme un camion, une semi-remorque (A) ou une remorque, laquelle traverse est dotée d'un corps de base allongé (8d), qui présente une surface d'appui (8x), avec laquelle la traverse (8) peut être installée sur une surface correspondante de l'élément de plancher (B), et avec un élément de raccordement (8g, 8h), qui est fabriqué avec un matériau plus résistant que le corps de base (8d) et qui est destiné à être relié à un composant (9) au moyen d'un élément de liaison, comme une vis (28, 29), sachant que l'élément de raccordement (8g, 8h) est logé dans un évidement (8e1, 8e2), qui est formé dans le corps de base (8d), à distance de la surface d'appui (8x), et qui répartit sur le corps de base (8d) les charges transmises, en service, par l'intermédiaire de l'élément de liaison (28, 29), **caractérisée en ce que** le volume occupé par l'élément de raccordement (8g, 8h) est plus petit que le volume de l'évidement (8e1, 8e2) et qu'un volume restant de l'évidement (8e1, 8e2), présent entre l'élément de raccordement (8g, 8h) et les faces intérieures (81, 8m) de l'évidement (8e1, 8e2), est rempli avec une masse supplémentaire (8p, 8v), qui maintient, dans l'évidement (8e1, 8e2), l'élément de raccordement (8g, 8h), de manière fixe en rotation par rapport à l'élément de liaison (28, 29).

2. Traverse selon la revendication 1, **caractérisée en ce que** l'élément de raccordement (8g, 8h) est réalisé en forme de plaque.

3. Traverse selon la revendication 2, **caractérisée en ce que** l'évidement (8e1, 8e2) et, avec lui, l'élément de raccordement (8g, 8h) s'étendent parallèlement à la surface d'appui (8x).

4. Traverse selon l'une des revendications précédentes, **caractérisée en ce que** le volume restant de l'évidement (8e1, 8e2) est complètement rempli par la masse supplémentaire (8p, 8v).

5. Traverse selon l'une des revendications précédentes, **caractérisée en ce que** la masse supplémentaire (8p, 8v) est une matière d'étanchéité.

6. Traverse selon l'une des revendications précédentes, **caractérisée en ce que** la masse supplémentaire (8p, 8v) est une masse collante, qui se durcit après avoir rempli l'évidement (8e1, 8e2).

7. Traverse selon l'une des revendications précédentes, **caractérisée en ce qu'**est prévu au moins un écarteur (8k, 8s1, 8s2), qui maintient l'élément de raccordement (8g, 8h) à une distance définie de la face intérieure (81, 8m) de l'évidement (8e1, 8e2), qui lui est associée.

8. Traverse selon la revendication 7, **caractérisée en ce qu'**au moins un écarteur (8k) est formé sur l'élément de raccordement (8g, 8h).

9. Traverse selon l'une des revendications précédentes, **caractérisée en ce qu'**au moins un écarteur (8s1, 8s2) est formé sur l'une des faces intérieures de l'évidement (8e1, 8e2).

10. Traverse selon l'une des revendications précédentes, **caractérisée en ce que**, sur l'élément de raccordement (8g, 8h), est prévu au moins un élément façonné, qui coopère par emboîtement avec un élément façonné, formé sur l'une des faces intérieures de l'évidement (8e1, 8e2).

11. Traverse selon l'une des revendications précédentes, **caractérisée en ce que** l'évidement (8e1, 8e2) est réalisé sous la forme d'un trou borgne, accessible à partir de l'un des côtés longitudinaux (8f) de la traverse (8).

12. Traverse selon l'une des revendications précédentes, **caractérisée en ce que**, partant de la surface d'appui (8x), est formée, dans la traverse (8), une ouverture (8w), qui, conduisant dans l'évidement, est destinée au passage de l'élément de liaison (28, 29).

13. Traverse selon la revendication 12, **caractérisée en ce que** l'ouverture (8w) pour l'élément de liaison (28) est pourvue d'une pièce d'étanchéité (28e).

14. Elément de plancher pour un véhicule, comme un camion, une semi-remorque (A) ou une remorque,
- avec une couche superficielle supérieure (1), dont la surface libre forme une surface de chargement (F), sur laquelle une charge à transporter (T) peut être déposée,
- avec une couche superficielle inférieure (10), qui termine l'élément de plancher (B) sur la face inférieure (US) du véhicule (S),
et
- avec des entretoises (7, 7a, 7b, 8), qui, orientées perpendiculairement à la direction longitudinale (L) de l'élément de plancher (B) et à distance les unes des autres, divisent en chambres (18), l'espace existant entre les couches de superficielles (1, 10),
- sachant qu'au moins l'une des entretoises est une traverse (8), à laquelle un composant (9) peut être fixé,
**caractérisé en ce que**
la traverse (8) au moins prévue est réalisée selon l'une des revendications 1 à 13.

15. Elément de plancher selon la revendication 14, **caractérisé en ce que**, dans la surface inférieure de la couche superficielle supérieure (1), associée à la traverse (8), est formée une cavité (3a) et que la traverse (8) est dotée d'une saillie (8u), qui s'emboîte dans la cavité (3a).

16. Elément de plancher selon l'une des revendications 14 ou 15, **caractérisé en ce que**, comme élément de liaison, destiné à relier la traverse (8) à un composant (9), est prévu un boulon fileté (28, 29), qui est introduit dans une ouverture, pratiquée dans la couche superficielle inférieure (10), et dans une ouverture (8w), qui, pratiquée dans la traverse, conduit à l'élément de raccordement (8g, 8h), et que l'élément de liaison (28) est doté d'une partie de tige (28b), dans la région de laquelle l'élément de liaison (28) est logé en étant retenu par ajustage, dans l'ouverture (8w) de la traverse (8) conduisant à l'élément de raccordement (8g, 8h).

17. Elément de plancher selon la revendication 16, **caractérisé en ce que** l'élément de liaison (28) est doté d'une tête (28d), qui vient porter contre la face extérieure de la couche superficielle inférieure (10), et qu'une section de centrage (28c) conique, s'amincissant en direction de la partie de tige (28), est formée entre la tête (28d) et la partie de tige (28b).

18. Elément de plancher selon l'une des revendications 14 à 17, **caractérisé en ce que**, dans la couche superficielle inférieure (10), est formée une cavité (32), qui entoure l'ouverture (8w) pour l'élément de liaison (29) et dans laquelle est logée une pièce d'étanchéité (30).
